# EUROPÄISCHE PATENTSCHRIFT

(11) **EP 2 536 985 B1**
(45) Veröffentlichungstag und Bekanntmachung des Hinweises auf die Patenterteilung: **26.09.2018**
(21) Anmeldenummer: 11702964.5
(22) Anmeldetag: 01.02.2011
(51) Int. Cl.: F25D 23/00

(54) **ELEKTRISCHES GERÄT**
ELECTRICAL DEVICE
APPAREIL ÉLECTRIQUE

(30) Priorität: 17.02.2010 DE 102010002043
(43) Veröffentlichungstag der Anmeldung: 26.12.2012
(73) Patentinhaber: BSH Hausgeräte GmbH, 81739 München (DE)
(72) Erfinder: LAIBLE, Karl-Friedrich, 89129 Langenau (DE); KRAPP, Michael, 89564 Nattheim (DE)
(86) Internationale Anmeldenummer: PCT/EP2011/051365
(87) Internationale Veröffentlichungsnummer: WO 2011/101234

(56) Entgegenhaltungen:
- EP-A1- 1 060 539
- AT-B- 358 648
- DE-U1-202005 007 418
- US-A- 4 170 391

## Beschreibung

Die Erfindung betrifft ein elektrisches Gerät, insbesondere ein Haushaltsgerät, vorzugsweise ein Kältegerät.

Die EP 1 060 539 offenbart ein Kältegerät, das ein elektrisch leitendes Gehäuse, ein am Gehäuse befestigtes und mit dem Gehäuse elektrisch leitend verbundenes Trägerelement und einen am Trägerelement befestigten Verdichter aufweist. Der Verdichter ist mit dem Trägerelement über ein Erdungskabel elektrisch verbunden und das Trägerelement umfasst wenigstens zwei im Längsschnitt dreieckförmig ausgebildete Kontaktspitzen, welche mit Aufnahmen am Gehäuse kraft- und/oder stoffschlüssig zusammenzuwirken.

US4170391 A offenbart ein elektrisches Gerät gemäß den Oberbegriff des Anspruchs 1.

Die Aufgabe der Erfindung ist es, ein elektrisches Gerät mit zwei elektrisch verbundenen Blechteilen anzugeben, bei dem die elektrische Verbindung kontaktsicherer ausgeführt ist.

Die Aufgabe der Erfindung wird gelöst durch ein elektrisches Gerät gemäß Anspruch 1, aufweisend ein erstes Blechteil, ein zweites Blechteil und eine erste Schraube, mittels der die beiden Blechteile mechanisch derart verschraubt sind, dass der Schraubenkopf der ersten Schraube das erste Blechteil gegen das zweite Blechteil drückt, und das erste Blechteil ein in Richtung des zweites Blechteils vom ersten Blechteil abstehendes erstes Kontaktelement aufweist, das für einen elektrischen Kontakt der beiden Blechteile gegen das zweite Blechteil drückt, wobei das erste Kontaktelement am ersten Blechteil derart angeordnet ist, dass es sich zumindest teilweise unterhalb des Schraubenkopfes der ersten Schraube befindet, sodass der Schraubenkopf der ersten Schraube das erste Kontaktelement direkt gegen das zweite Blechteil drückt. Das elektrische Gerät ist z.B. ein Haushaltsgerät. Unter einem Haushaltsgerät wird ein Gerät verstanden, das zur Haushaltsführung eingesetzt wird. Das kann insbesondere ein Haushaltsgroßgerät sein, wie beispielsweise eine Waschmaschine, ein Wäschetrockner, eine Geschirrspülmaschine, ein Gargerät, eine Dunstabzugshaube, ein Kältegerät oder ein Klimagerät. Vorzugsweise ist das Gerät ein Kältegerät, insbesondere ein Haushaltskältegerät, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination, eine Gefriertruhe oder ein Weinkühlschrank.

Das erfindungsgemäße Gerät umfasst demnach die beiden Blechteile, die mittels des Kontaktelements elektrisch verbunden sind. Dies ist z.B. dann nötig, wenn die Blechteile mit einem Erdungskabel einer elektrischen Komponente des elektrischen Gerätes verbunden sind. Da erfindungsgemäß das Kontaktelement derart am ersten Blechteil angeordnet ist, dass es zumindest teilweise unterhalb des Schraubekopfes der ersten Schraube sich befindet, kann bei festgezogener ersten Schraube deren Schraubenkopf das Kontaktelement direkt gegen das zweite Blechteil drücken, wodurch Vorraussetzungen für einen sicheren elektrischen Kontakt der beiden Blechteile auch bei einem relativ dünnen ersten Blechteil gegeben sind. Insbesondere ergibt sich bei angezogener ersten Schraube ein sicherer elektrischer Kontakt auch bei Blechdicken von 0,5mm oder weniger des ersten Blechteils.

Um einen sicheren elektrischen Kontakt verbessert sicher zu stellen, ist nach einer Variante des erfindungsgemäßen Gerätes das erste Kontaktelement keilförmig ausgebildet und/oder weist eine schneidartige Kante auf. Dadurch ist es z.B. möglich, dass das erste Kontaktelement durch die erste Schraube in das zweite Blechteil gedrückt oder gepresst wird. Auch wird es durch diese Variante vereinfacht ermöglicht, dass das erste Kontaktelement gegebenenfalls eine Beschichtung des zweiten Blechteils durchbricht, um den elektrischen Kontakt zu ermöglichen.

Das erfindungsgemäße Gerät kann vorzugsweise derart ausgebildet sein, dass die erste Schraube mit ihrem Schraubenkopf das erste Kontaktelement derart gegen das zweite Blechteil drückt, dass das erste Kontaktelement kraft- und/oder formschlüssig mit dem zweiten Blechteil zusammen wirkt. Dies erhöht die Qualität des elektrischen Kontakts.

Der Kraft und/oder Formschluss kann verbessert ausgeführt werden, wenn nach einer Ausführungsform des elektrischen Gerätes das zweite Blechteil eine Aufnahme aufweist, die derart an die Geometrie des erste Kontaktelementes angeglichen ist, dass die erste Schraube mit ihrem Schraubenkopf das erste Kontaktelement in die Aufnahme insbesondere kraft- und/oder formschlüssig drückt.

Das zweite Blechteil kann vorzugsweise eine Öffnung aufweisen, durch die das Gewinde der ersten Schraube hindurchragt, wobei die erste Schraube mit einem Hinterlegteil insbesondere aus Kunststoff verschraubt ist, das auf der dem ersten Blechteil abgewandten Seite des zweiten Blechteils angeordnet ist.

Damit die Anpresskräfte der ersten Schrauben z.B. durch einen fließenden Kunststoff des Hinterlegteils nicht reduziert wird, kann die Öffnung des zweiten Blechteils vorzugsweise derart strukturiert sein, dass das Gewinde der ersten Schraube in den Randbereich der Öffnung eingreift. Dies lässt sich z.B. dadurch realisieren, dass die Öffnung des zweiten Blechteils eine gezackte Struktur aufweist.

Die Aufnahme kann vorzugsweise Teil der Öffnung des zweiten Blechteils sein und/oder das erste Kontaktelement kann vorzugsweise durch Schneidbiegen eines Blechabschnitts des ersten Blechteils gebildet sein.

Die elektrische Verbindung zweier Blechteile kann insbesondere für Erdunsgzwecke interessant sein. Nach einer Variante des erfindungsgemäßen Gerätes ist das zweite Blechteil zumindest Teil eines Gehäuses des Gerätes. Dann ist es möglich, dass das erste Blechteil mit einem Erdungskabel einer elektrischen Komponente des elektrischen Gerätes elektrisch verbunden ist. Das Gehäuse ist dann über den elektrischen Kontakt zwischen den beiden Blechteilen mit dem Erdungskabel elektrisch verbunden.

Das Gehäuse kann zwei Seitenwände aufweisen und das erste Blechteil kann als eine Querstrebe ausgebildet sein, die mit ihrem einen Ende mittels der ersten Schraube mit einem der Seitenwände verschraubt ist und das erste Kontaktelement an diesem Ende angeordnet ist, um den elektrischen Kontakt mit dieser Seitenwand zu ermöglichen. Dann ist es auch möglich, dass die Querstrebe mit ihrem anderen Ende mittels einer zweiten Schraube mit der anderen Seitenwand verschraubt ist, wobei das andere Ende ein dem ersten Kontaktelement entsprechend ausgebildetes zweites Kontaktelement aufweist, um einen elektrischen Kontakt zwischen der Querstrebe und der anderen Seitenwand zu ermöglichen. Da gemäß dieser Variante die Querstrebe mit beiden Seitenwänden über jeweils ein Kontaktelement verbunden ist, die erfindungsgemäß derart an der Querstrebe angeordnet sind, dass sie zumindest teilweise unterhalb der relevanten Schraubeköpfe liegen, wird eine relativ sicherer elektrische Verbindung zwischen der Querstrebe und beiden Seitenwänden ermöglicht. Die Querstrebe kann insbesondere mit einem Erdungskabel einer elektrischen Komponente des erfindungsgemäßen Gerätes elektrisch verbunden sein.

Das erfindungsgemäße Gerät kann vorzugsweise als ein Kältegerät mit einem Gehäuse und einem einen Verdichter aufweisenden Kältekreislauf ausgeführt sein, wobei der Verdichter mittels eines Erdungskabels mit der Querstrebe, die insbesondere als Schäumtraverse ausgebildet ist, elektrisch verbunden ist. Die Querstrebe bzw. die Schäumtraverse kann insbesondere eine Blechdicke von maximal 0,5 mm aufweisen.

Je nach Ausführungsform des erfindungsgemäßen elektrischen Gerätes insbesondere in Form eines Kältegerätes kann es vorgesehen sein, eine Verdichtertragschiene, auf der der Verdichter befestigt ist, nicht mehr erden zu müssen, da es beispielsweise vorgesehen sein kann, dass auf der Verdichtertragschiene außer dem Verdichter keine elektrischen Bauteile auf dieser Tragschiene angeordnet sind. Statt der Tragschiene kann nun das Erdungskabel des Verdichters mit der nicht lackierten Schäumtraverse verbunden sein. Diese kann aber relativ dünn, insbesondere maximal 0,5mm dick ausgeführt sein.

Erfindungsgemäß wird daher das z.B. als Kontaktkeil ausgeführte Kontaktelement gegebenenfalls direkt unter den Schraubenkopf geschoben. Gegebenenfalls die als ZigZag-Loch ausgeführte Öffnung des zweiten Blechteils kann um eine keilaufnehmende Geometrie erweitert werden, um insbesondere einen verbesserten Form und/oder Kraftschluss zwischen dem Kontaktelement und dem zweiten Blechteil zu ermöglichen. Somit ist nur noch eine einzige Schraube nötig, um einen relativ guten elektrischen Kontakt zwischen dem Kontaktelement und dem zweiten Blechteil auch bei einem relativ dünnen ersten Blechteil zu gewährleisten.

Dadurch, dass das Kontaktelement zumindest teilweise, vorzugsweise komplett direkt unter dem Schraubenkopf liegt, können sich folgende Vorteile ergeben:
Ein sicherer elektrischer Kontakt ergibt sich auch bei relativ dünnen Blechen.

Die Anpresskraft für das Kontaktelement kann direkt eingeleitet werden.

Bei einer Querstrebe als erstes Blechteil sind nur noch zwei Schrauben zur Befestigung an den Seitenwänden ausreichend.

Wird als erstes Blechteil die Schäumtraverse verwendet, dann können separate Erdungsschrauben eingespart werden, da durch das Festschrauben der Schäumtraverse an den Seitenwänden die elektrische Verbindung zumindest indirekt zwischen der Schäumtraverse und den Seitenwänden entsteht.

Durch einen gegebenenfalls realisierten Formschluss zwischen der Schäumtraverse und den Geräteseitenwänden aufgrund des gegebenenfalls entsprechend ausgeführten Kontaktelementes ergibt sich ohne zusätzlichen Aufwand hinten am Gerät ein exaktes Breitenmaß.

Ein Ausführungsbeispiel der Erfindung ist exemplarisch in den beigefügten schematischen Zeichnungen dargestellt. Es zeigen:
- Fig. 1: einen Ausschnitt eines Haushaltskältegerätes mit einem elektrisch leitenden Gehäuse und einer mit dem Gehäuse elektrisch verbundenen Schäumtraverse in einer perspektivischen Darstellung,
- Fig. 2: die Schäumtraverse in einer perspektivischen Darstellung,
- Figs. 3, 4: einen Ausschnitt der Schäumtraverse,
- Figs. 5-7: Ansichten des Gehäuses mit Schäumtraverse im Bereich der Verbindung zwischen dem Gehäuse und der Schäumtraverse.

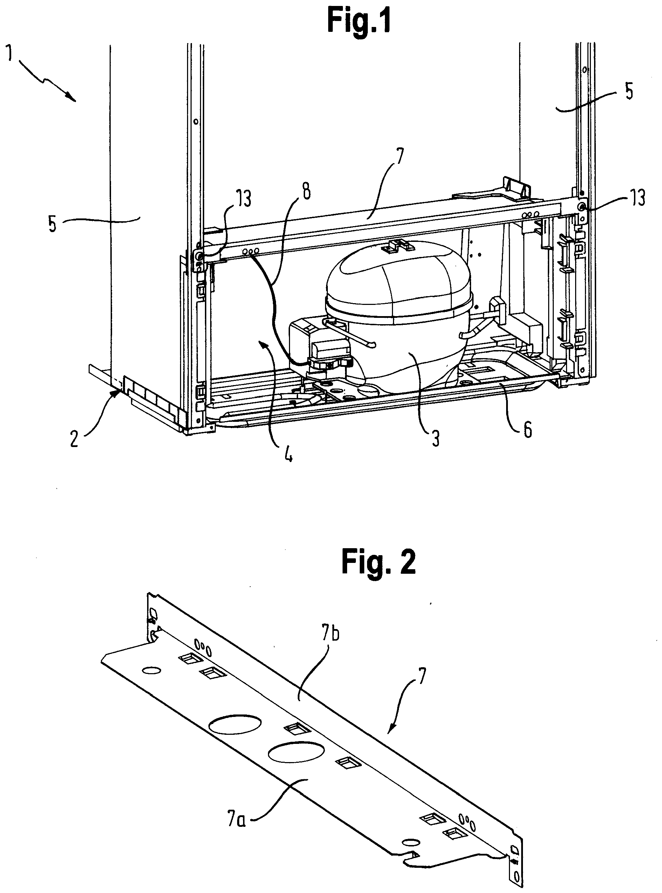

Die Figur 1 zeigt in perspektivischer Darstellung einen Ausschnitt eines Haushaltskältegerätes 1 als Beispiels eines Hausgerätes bzw. allgemein als Beispiel eines elektrischen Gerätes.

Das Haushaltskältegerät 1 weist einen Korpus bzw. ein wärmeisolierend ausgebildetes Gehäuse 2 auf, das einen nicht näher dargestellten Kälteraum begrenzt. Am Gehäuse 2 des Haushaltkältegerät 1 ist z.B. ein nicht näher gezeigtes Türblatt angeschlagen, um den Kälteraum zu öffnen und zu schließen. Der Kälteraum kann von einer dem Fachmann im Prinzip bekannten Kältevorrichtung gekühlt werden, die insbesondere als ein Kältekreislauf mit einem Verdampfer und einem Verdichter 3 ausgebildet ist. Der Verdichter 3 ist in einem nischenartig ausgebildeten Maschineraum 4, der von der Rückseite des Haushaltskältegerätes 1 zugänglich ist, angeordnet.

Im Falle des vorliegenden Ausführungsbeispiels weist das Gehäuse 2 zwei elektrisch leitende Seitenwände 5 und einen Boden auf, der zumindest teilweise aus einer Verdichtertragschiene 6 gebildet ist. Die Verdichtertragschiene 6, auf der der Verdichter 3 befestigt ist, ist mit beiden Seitenwänden 5 verbunden und schließt den Maschinenraum 4 nach unten ab. Die Seitenwände 5 sind z.B. aus einem Blech gefertigt, das vorzugsweise eine Blechdicke von maximal 0,5 mm aufweist, und sind mit einem Lack beschichtet. Die Seitenwände 5 bilden somit im Allgemeinen ein Blechteil dar.

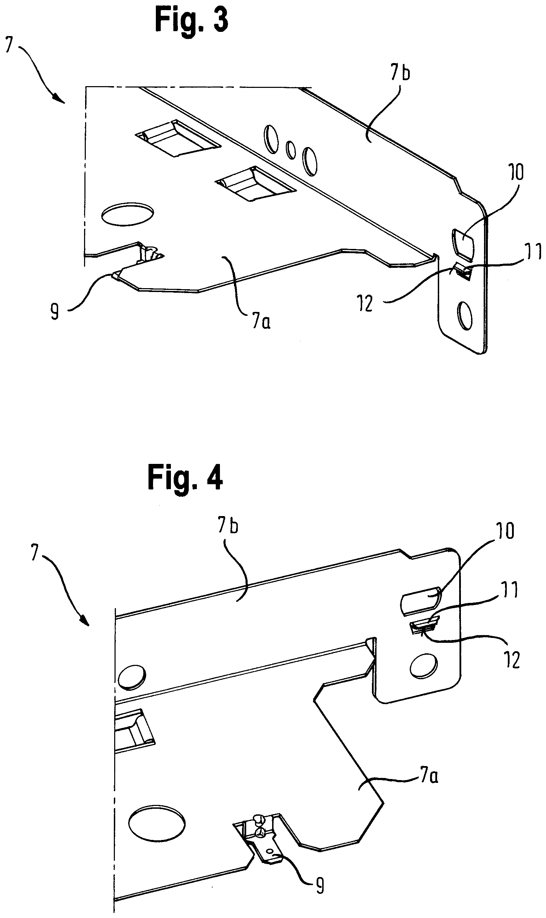

Im Falle des vorliegenden Ausführungsbeispiels weist das Haushaltskältegerät 1 ein elektrisch leitendes Blechteil, insbesondere eine Querstrebe bzw. eine Schäumtraverse 7 auf, die mit ihren Enden mit den Seitenwände 5 verbunden ist und den Maschineraum 4 nach oben abschließt. Die Schäumtraverse 7, die in einer perspektivischen Darstellung in der Fig. 2 näher gezeigt ist, ist insbesondere aus einem gestanzten und nicht lackiertem Blech hergestellt. Das Blech ist vorzugsweise relativ dünn und weist z.B. eine Blechdicke von maximal 0,5 mm auf. Detailansichten einer der beiden Seitenenden der Schäumtraverse 7 sind in der Figuren 3 und 4 dargestellt.

Der Verdichter 3 umfasst ein Erdungskabel 8, das mit der Schäumtraverse 7 elektrisch verbunden ist. Dazu umfasst die Schäumtraverse 7 beispielsweise eine einstückig angeformte bzw. aus dem Blech der Schäumtraverse 7 frei geschnittene Lasche 9, auf die das Erdungskabel 8 aufgesteckt und gegebenenfalls mit der Lasche 9 verschraubt ist.

Im Falle des vorliegenden Ausführungsbeispiels bildet die Schäumtraverse 7 eine Wandung 7a, die den Maschinenraum 4 nach oben abschließt. Die Schäumtraverse 7 weist ferner eine Abwinklung 7b auf, die zur Wandung 7a im rechten Winkel gebogenen ist und an der eine nicht näher gezeigte Rückwand des Haushaltskältegerätes 1 anliegt. An den Seiten der Abwinklung 7b weist diese im Falle des vorliegenden Ausführungsbeispiels jeweils eine Öffnung 10 auf, die vorzugsweise als Langlöcher ausgeführt sind.

Im Bereich der jeweiligen Öffnung 10 weist die Schäumtraverse 7 im Falle des vorliegenden Ausführungsbeispiels jeweils ein aus dem Blech der Schäumtraverse 7 frei geschnittenes, insbesondere keilförmiges Kontaktelement 11 auf. Die Kontaktelemente 11 sind aus der Ebene der Abwinklung 7b heraus abgewinkelt, vorzugsweise im rechten Winkel, und weisen vorzugsweise an ihren freien Enden eine schneidenartige Kante 12 auf.

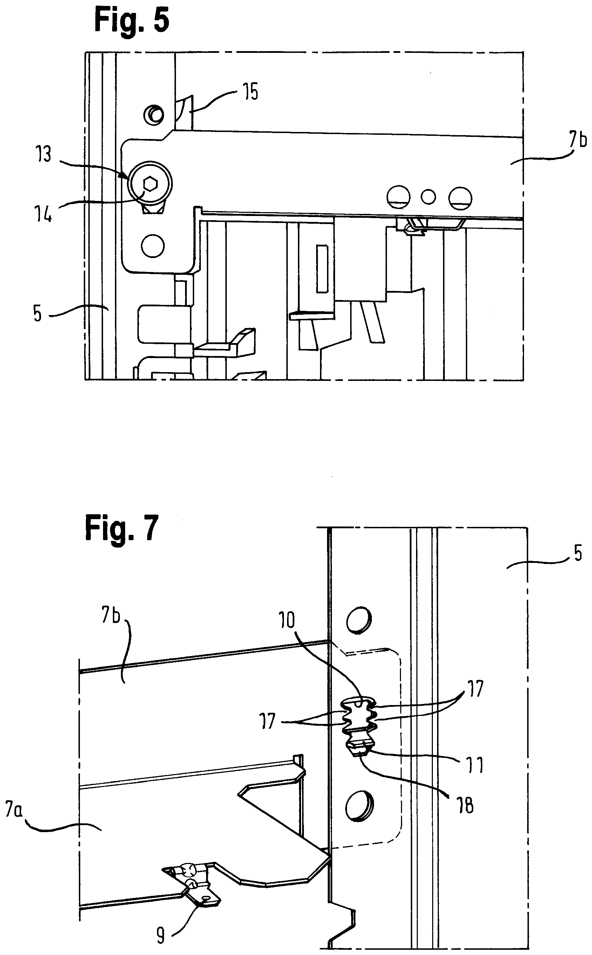

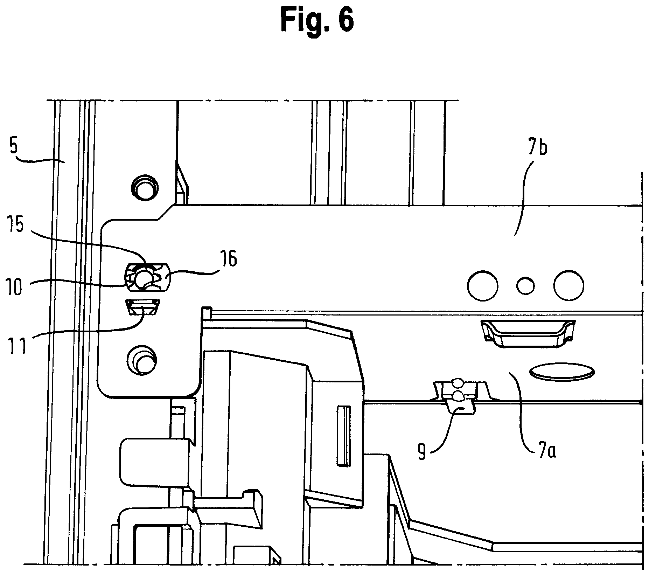

Die Schäumtraverse 7 ist mittels Schrauben 13, die insbesondere aus Metall gefertigt bzw. elektrisch leitend sind, an den Seitenwänden 5 befestigt. Die Schrauben 13 sind durch die Öffnungen 10 der Schäumtraverse 7 geführt und drücken mit ihren Schraubenköpfen 14 die Abwinklung 7b der Schaumtraverse 7 m Bereich der Öffnungen 10 gegen die Seitenwände 5. Ein Detailausschnitt des Haushaltskältegerätes 1 im Bereich einer der Öffnungen 10 mit entsprechender Schraube 13 ist in der Fig. 5 dargestellt. Der entsprechende Detailausschnitt ohne Schraube 13 ist in der Fig. 6 gezeigt. Der entsprechend Ausschnitt ohne Schraube 13 von Richtung Innen des Haushaltskältegerät 1 ist in der Fig. 7 dargestellt.

Im Falle des vorliegenden Ausführungsbeispiels umfasst das Haushaltskältegerät 1 jeweils ein Hinterlegteil 15, das hinter der jeweiligen Seitenwand 5 angeordnet ist und ein Gegengewinde umfasst, mit dem das nicht näher dargestellte Gewinde der jeweiligen Schraube 13 verschraubt ist. Das Hinterlegteil 15 ist vorzugsweise aus Kunststoff gefertigt und die Seitenwände 5 umfassen jeweils eine Öffnung 16, die mit den Öffnungen 10 der Schäumtraverse 7 in Deckung gebracht sind, sodass die Gewinde der Schrauben 13 durch die Öffnungen 16 der Seitenwände 5 hindurch geführt werden können, um mit den Hinterlegteilen 15 verschraubt werden zu können. Im Falle des vorliegenden Ausführungsbeispiels greifen die Schrauben 13 in die aus Kunststoff gefertigten Hinterlegteile 15, um einen relativ guten Schraubfall zu realisieren.

Damit die Anpresskräfte der Schrauben 13 durch einen fließenden Kunststoff der Hinterlegteile 15 nicht reduziert werden, weisen im Falle des vorliegenden Ausführungsbeispiels die Öffnungen 16 der Seitenwände 5 eine gezackte Struktur auf. Diese gezackte Struktur ist beispielsweise derart ausgeführt, dass die Öffnungen 16 der Seitenwände Zacker 17 umfassen, in die im Falle des vorliegenden Ausführungsbeispiels die Schrauben 13 eingreifen.

Wie bereits beschrieben, weist die Schäumtraverse 7 die beiden Kontaktelemente 11 auf. Diese sind vorgesehen, einen elektrischen Kontakt zwischen der Schäumtraverse 7 und den beiden Seitenwänden 5 herzustellen. Die Kontaktelemente 11 sind dabei derart nahe an den Öffnungen 10 der Schäumtraverse 7, durch die die Schrauben 13 hindurch geführt sind, aus dem Blech der Schaumtraverse 7 frei geschnitten, dass die jeweiligen Schraubenköpfe 14 derjenigen Schraube 13, mit der die Schäumtraverse 7 an der relevanten Seitenwand 5 geschraubt ist, zumindest teilweise, wenn nicht gar komplett überdecken, wodurch die Schrauben 13 die jeweiligen Kontaktelemente 11 gegen die Seitenwände 5 pressen. Dadurch dass die Kontaktelemente 11 direkt unter den Schraubenköpfen 14 liegen, können die Schrauben 13 ihre Anpresskraft direkt auf die Kontaktelemente 11 einleiten.

Beim Verschrauben der Schäumtraverse 7 drücken somit die Schrauben 13 die keilförmigen Kontaktelemente 11 in die Seitenwände 5. Die Seitenwände 5 weisen im Falle des vorliegenden Ausführungsbeispiels in den Bereichen der Seitenwände 5, in denen die Kontaktelemente 11 in die Seitenwände 5 drücken, Aussparungen 18 auf, die vorzugsweise Teil der Öffnungen 16 sind. Beim Eindrücken der Kontaktelemente 11 wird in diesem Bereich die Beschichtung der Seitenwände 5 weggedrückt, um einen elektrischen Kontakt zwischen der Schäumtraverse 7 und den Seitenwänden 5 zu ermöglichen.

Im Falle des vorliegenden Ausführungsbeispiels weist die Schäumtraverse 7 auf beiden Seiten die keilförmigen Kontaktelemente 11 auf. Beim Verschrauben der Schäumtraverse 7 mit den Seitenwänden 5 entsteht dadurch eine relativ exakte Gerätebreite als Nebeneffekt.

### BEZUGSZEICHENLISTE

- 1: Haushaltskältegerät
- 2: Gehäuse
- 3: Verdichter
- 4: Maschineraum
- 5: Seitenwände
- 6: Verdichtertragschiene
- 7: Schäumtraverse
- 7a: Wandung
- 7b: Abwinklung
- 8: Erdungskabel
- 9: Lasche
- 10: Öffnung
- 11: Kontaktelement
- 12: Kante
- 13: Schrauben
- 14: Schraubenköpfe
- 15: Hinterlegteil
- 16: Öffnungen
- 17: Zacker
- 18: Aussparungen

## Patentansprüche

1. Elektrisches Gerät, aufweisend ein erstes Blechteil (7), ein zweites Blechteil (5) und eine erste Schraube (13), mittels der die beiden Blechteile (7, 5) mechanisch derart verschraubt sind, dass der Schraubenkopf (14) der ersten Schraube (13) das erste Blechteil (7) gegen das zweite Blechteil (5) drückt, und das erste Blechteil (7) ein in Richtung des zweites Blechteils (5) vom ersten Blechteil (7) abstehendes, durch Schneidbiegen eines Blechabschnitts des ersten Blechteils (7) gebildetes erstes Kontaktelement (11) aufweist, das für einen elektrischen Kontakt der beiden Blechteile (7, 5) gegen das zweite Blechteil (5) drückt, **dadurch gekennzeichnet, dass** das erste Kontaktelement (11) am ersten Blechteil (7) derart angeordnet ist, dass es sich zumindest teilweise unterhalb des Schraubenkopfes (14) der ersten Schraube (13) befindet, sodass der Schraubenkopf (14) der ersten Schraube (13) das erste Kontaktelement (11) direkt gegen das zweite Blechteil (5) drückt, und das zweite Blechteil (5) eine Aufnahme (18) aufweist, die derart an die Geometrie des ersten Kontaktelementes (11) angeglichen ist, dass die erste Schraube (13) mit ihrem Schraubenkopf (14) das erste Kontaktelement (11) in die Aufnahme (18) kraft- und/oder formschlüssig drückt, sodass das erste Kontaktelement (11) kraft- und/oder formschlüssig mit dem zweiten Blechteil (5) zusammen wirkt.

2. Gerät nach Anspruch 1, **dadurch gekennzeichnet, dass** das erste Kontaktelement (11) keilförmig ausgebildet ist und/oder eine schneidartige Kante (12) aufweist.

3. Gerät nach Anspruch 1 oder 2, **dadurch gekennzeichnet, dass** das zweite Blechteil (5) eine Öffnung (16) aufweist, durch die das Gewinde der ersten Schraube (13) hindurchragt, und die erste Schraube (13) mit einem Hinterlegteil (15) insbesondere aus Kunststoff verschraubt ist, das auf der dem ersten Blechteil (7) abgewandten Seite des zweiten Blechteils (5) angeordnet ist.

4. Gerät nach Anspruch 3, **dadurch gekennzeichnet, dass** die Öffnung (16) des zweiten Blechteils (5) derart strukturiert ist, dass das Gewinde der ersten Schraube (13) in den Randbereich der Öffnung (16) eingreift.

5. Gerät nach Anspruch 4, **dadurch gekennzeichnet, dass** die Öffnung (16) des zweiten Blechteils (5) eine gezackte Struktur aufweist.

6. Gerät nach Anspruch 4 oder 5, **dadurch gekennzeichnet, dass** die Aufnahme (18) Teil der Öffnung (16) des zweiten Blechteils (5) ist.

7. Gerät nach einem der Ansprüche 1 bis 6, **dadurch gekennzeichnet, dass** das zweite Blechteil (5) zumindest Teil eines Gehäuses (2) des Gerätes (1) ist.

8. Gerät nach Anspruch 7, **dadurch gekennzeichnet, dass** das Gehäuse (2) zwei Seitenwände (5) aufweist und das erste Bauteil (7) als eine Querstrebe ausgebildet ist, die mit ihrem einen Ende mittels der ersten Schraube (13) mit einem der Seitenwände (5) verschraubt ist und das erste Kontaktelement (11) an diesem Ende angeordnet ist, um den elektrischen Kontakt mit dieser Seitenwand (5) zu ermöglichen, und die mit ihrem anderen Ende mittels einer zweiten Schraube mit der anderen Seitenwand verschraubt ist, wobei das andere Ende ein dem ersten Kontaktelement entsprechend ausgebildetes zweites Kontaktelement aufweist, um einen elektrischen Kontakt zwischen der Querstrebe und der anderen Seitenwand zu ermöglichen.

9. Gerät nach Anspruch 8, **dadurch gekennzeichnet, dass** es als ein Kältegerät (1) mit einem Gehäuse (2) und einem einen Verdichter (3) aufweisenden Kältekreislauf ausgeführt ist, und der Verdichter (3) mittels eines Erdungskabels (8) mit der Querstrebe, die insbesondere als Schäumtraverse (7) ausgebildet ist, elektrisch verbunden ist.

## Claims

1. Electrical device (1) having a first sheet metal part (7), a second sheet metal part (5) and a first screw (13), by means of which the two sheet metal parts (7, 5) are mechanically screwed together such that the screw head (14) of the first screw (13) presses the first sheet metal part (7) against the second sheet metal part (5), and the first sheet metal part (7) has a first contact element (11) which projects from the first sheet metal part (7) in the direction of the second sheet metal part (5) and is formed by cutting and bending of a sheet metal section of the first sheet metal part (7), said first contact element (11) pressing against the second sheet metal part (5) to achieve an electrical contact of the two sheet metal parts (7, 5), **characterised in that** the first contact element (11) is arranged on the first sheet metal part (7) such that it is located at least partially below the screw head (14) of the first screw (13), so that the screw head (14) of the first screw (13) presses the first contact element (11) directly against the second sheet metal part (5), and the second sheet metal part (5) has a receptacle (18) which is aligned to the geometry of the first contact element (11) such that at its screw head (14) the first screw (13) presses the first contact element (11) into the receptacle (18) in a force-fit and/or form-fit manner, so that the first contact element (11) interacts in a force-fit and/or form-fit manner with the second sheet metal part (5).

2. Device according to claim 1, **characterised in that** the first contact element (11) is designed to be wedge-shaped and/or has a cutting-type edge (12).

3. Device according to claim 1 or 2, **characterised in that** the second sheet metal part (5) has an opening (16) through which the thread of the first screw (13) protrudes, and the first screw (13) is screwed with a backing piece (15), in particular made of plastic, which is arranged on the side of the second sheet metal part (5) facing away from the first sheet metal part (7).

4. Device according to claim 3, **characterised in that** the opening (16) of the second sheet metal part (5) is structured such that the thread of the first screw (13) engages in the edge region of the opening (16).

5. Device according to claim 4, **characterised in that** the opening (16) of the second sheet metal part (5) has a jagged structure.

6. Device according to claim 4 or 5, **characterised in that** the receptacle (18) is part of the opening (16) of the second sheet metal part (5).

7. Device according to one of claims 1 to 6, **characterised in that** the second sheet metal part (5) is at least part of a housing (2) of the device (1).

8. Device according to claim 7, **characterised in that** the housing (2) has two side walls (5) and the first component (7) is designed as a cross-strut which at its one end is screwed by means of the first screw (13) to one of the side walls (5) and the first contact element (11) is arranged at this end to enable electrical contact with said side wall (5), and which at its other end is screwed by means of a second screw to the other side wall, wherein the other end has a second contact element designed in accordance with the first contact element to enable electrical contact between the cross-strut and the other side wall.

9. Device according to claim 8, **characterised in that** it is embodied as a refrigerating device (1) with a housing (2) and a refrigeration circuit having a compressor (3), and the compressor (3) is electrically connected by means of an earth cable (8) to the cross-strut, which is designed in particular as a foam cross-bar (7).

## Revendications

1. Appareil électrique, présentant une première pièce de tôle (7), une deuxième pièce de tôle (5) et une première vis (13) au moyen de laquelle les deux pièces de tôle (7, 5) sont mécaniquement vissées de telle façon que la tête de vis (14) de la première vis (13) comprime la première pièce de tôle (7) contre la deuxième pièce de tôle (5) et la première pièce de tôle (7) présente un premier élément de contact (11) dans le sens de la deuxième pièce de tôle (5) écarté de la première pièce de tôle (7), formé par pliage par découpage d'une section de tôle de la première pièce de tôle (7), lequel est comprimé à des fins de contact électrique des deux pièces de tôle (7, 5) contre la deuxième pièce de tôle (5), **caractérisé en ce que** le premier élément de contact (11) est disposé sur la première pièce de tôle (7) de façon qu'il se trouve au moyen partiellement en dessous de la tête de vis (14) de la première vis (13), de sorte que la tête de vis (14) de la première vis (13) comprime le premier élément de contact (11) directement contre la deuxième pièce de tôle (5), et la deuxième pièce de tôle (5) présente un logement (18) aligné de telle façon à la géométrie du premier élément de contact (11) que la première vis (13) comprime, avec sa tête de vis (14) le premier élément de contact (11) dans le logement (18) de force et/ou par emboîtement de sorte que le premier élément de contact (11) coopère, de force et/ou par emboîtement avec la deuxième pièce de tôle (5).

2. Appareil selon la revendication 1, **caractérisé en ce que** le premier élément de contact (11) est exécuté conique et/ou présente une arête (12) comme à tranchant.

3. Appareil selon la revendication 1 ou 2, **caractérisé en ce que** la deuxième pièce de tôle (5) présente une ouverture (16) par laquelle dépasse le filet de la première vis (13), et la première vis (13) est vissée avec sa partie de renfort (15), en particulier en matière synthétique, agencée sur le côté opposé à la première pièce de tôle (7) de la deuxième pièce de tôle (5).

4. Appareil selon la revendication 3, **caractérisé en ce que** l'ouverture (16) de la deuxième pièce de tôle (5) est structurée de façon que le filet de la première vis (13) met en prise la zone marginale de l'ouverture (16).

5. Appareil selon la revendication 4, **caractérisé en ce que** l'ouverture (16) de la deuxième pièce de tôle (5) présente une structure en zigzag.

6. Appareil selon la revendication 4 ou 5, **caractérisé en ce que** le logement (18) est une partie de l'ouverture (16) de la deuxième pièce de tôle (5).

7. Appareil selon l'une des revendications 1 à 6, **caractérisé en ce que** la deuxième pièce de tôle (5) est au moins une partie d'un corps (2) de l'appareil (1).

8. Appareil selon la revendication 7, **caractérisé en ce que** le corps (2) possède deux parois latérales (5) et le premier élément constitutif (7) est exécuté comme une entretoise vissée avec sa première extrémité au moyen de la première vis (13) à l'une des parois latérales (5) et le premier élément de contact (11) est disposé sur cette extrémité pour permettre le contact électrique avec cette paroi latérale (5), et celle avec son autre extrémité est vissée au moyen d'une deuxième vis, à l'autre paroi latérale, l'autre extrémité présentant un deuxième élément de contact exécuté conformément au premier élément de contact, pour permettre un contact électrique entre l'entretoise et l'autre paroi latérale.

9. Appareil selon la revendication 8, **caractérisé en ce qu'**il est configuré comme un appareil frigorifique (1) avec un corps (2) et un cycle de froid présentant un compresseur (3) et le compresseur (3) est raccordé à l'électricité au moyen d'un câble de mise à la terre (8) avec l'entretoise, exécutée en particulier comme une traverse de mousse (7).
